# EUROPÄISCHE PATENTSCHRIFT

(11) **EP 3 662 156 B1**
(45) Veröffentlichungstag und Bekanntmachung des Hinweises auf die Patenterteilung: **21.02.2024**
(21) Anmeldenummer: 18732000.7
(22) Anmeldetag: 11.06.2018
(51) Int. Cl.: F02M 61/14

(54) **BRENNSTOFFEINSPRITZVENTIL**
FUEL INJECTION VALVE
SOUPAPE D'INJECTION DE CARBURANT

(30) Priorität: 31.07.2017 DE 102017213167
(43) Veröffentlichungstag der Anmeldung: 10.06.2020
(73) Patentinhaber: Robert Bosch GmbH, 70442 Stuttgart (DE)
(72) Erfinder: JUNG, Klaus, 71334 Waiblingen (DE); KELLER, Tobias, 71636 Ludwigsburg (DE); KRAUSE, Nelly, 71034 Boeblingen (DE)
(86) Internationale Anmeldenummer: PCT/EP2018/065316
(87) Internationale Veröffentlichungsnummer: WO 2019/025059

(56) Entgegenhaltungen:
- EP-A1- 2 133 615
- WO-A1-2013/183357
- JP-A- 2005 291 136
- JP-A- 2007 032 474
- US-A1- 2016 326 999

## Beschreibung

### Stand der Technik

Die Erfindung geht aus von einem Brennstoffeinspritzventil nach der Gattung des Hauptanspruchs.

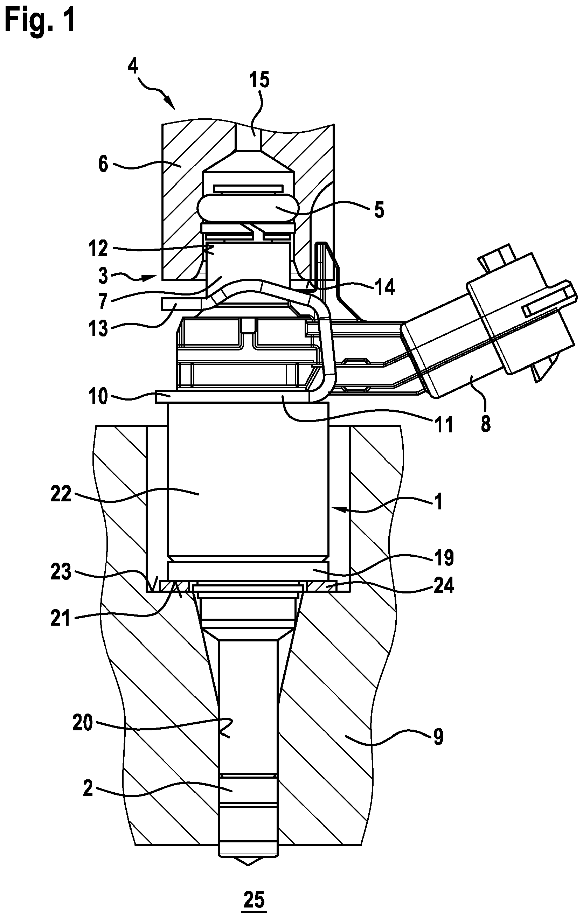

In der Figur 1 ist beispielhaft eine aus dem Stand der Technik bekannte Brennstoffeinspritzvorrichtung gezeigt, deren Zulaufstutzen mittels eines bekannten Dichtrings aus Elastomer gegen die Aufnahmetasse einer Brennstoffverteilerleitung abgedichtet ist. Die Brennstoffeinspritzvorrichtung eignet sich besonders für den Einsatz in Brennstoffeinspritzanlagen von gemischverdichtenden fremdgezündeten Brennkraftmaschinen. Derartige Brennstoffeinspritzventile sind zahlreich bekannt, beispielhaft sei die DE 103 59 299 A1 genannt.

Aus der JP 2007-032474 A ist bereits ein Brennstoffeinspritzventil für Brennstoffeinspritzanlagen von Brennkraftmaschinen bekannt, das einen Aktuator, durch dessen Erregung eine Hubbewegung einer Ventilnadel erzielbar ist, wodurch eine Betätigung eines Ventilschließkörpers, der zusammen mit einer Ventilsitzfläche einen Dichtsitz bildet, ermöglicht ist, und einen zulaufseitigen Zulaufstutzen für eine Brennstoffzufuhr aufweist. Am zulaufseitigen Ende des Zulaufstutzens ist eine Radialstützscheibe zur Verliersicherung des Brennstoffeinspritzventils in einem montierten Zustand angeordnet. Am
Zulaufstutzen ist ein ihn umgebender Dichtring vorgesehen, wobei die Radialstützscheibe in Strömungsrichtung gesehen noch vor dem Dichtring angeordnet ist. Die Radialstützscheibe kann mit einer radialen Auskragung in eine Ausnehmung eines Anschlussstutzens einer Verteilerleitung eingreifen.

Aus der JP 2005-291136 A ist bereits ein Brennstoffeinspritzventil bekannt, das an seinem zulaufseitigen Ende einen Sicherungsring aufweist. Der Sicherungsring dient dazu, den Dichtring gegen axialen Verlust weitgehend in seiner Position zu sichern. Eine Radialsicherung des gesamten Brennstoffeinspritzventils wird mit dem Sicherungsring nicht erreicht.

### Vorteile der Erfindung

Das erfindungsgemäße Brennstoffeinspritzventil mit den kennzeichnenden Merkmalen des Anspruchs 1 hat den Vorteil, dass der Zulaufstutzen des Brennstoffeinspritzventils durch Verpressen einer am Zulaufstutzen angeordneten Radialstützscheibe in der Aufnahmeöffnung eines Anschlussstutzens einer Brennstoffverteilerleitung verliersicher vormontierbar ist.

Um die Brennstoffeinspritzventile in die Aufnahmebohrungen des Zylinderkopfes einbauen zu können, müssen diese üblicherweise dem Motoren- bzw. Fahrzeughersteller zur Montage zugeliefert werden. In vorteilhafter Weise erfolgt diese Zulieferung in Form einer kompakten Baueinheit, der sogenannten Fuel Charge Assembly, bestehend aus der Brennstoffverteilerleitung und den bereits in den Aufnahmeöffnungen vormontierten Brennstoffeinspritzventilen. Dabei ist nun in vorteilhafter Weise gewährleistet, dass die Brennstoffeinspritzventile nach der Vormontage an der Brennstoffverteilerleitung, in der sich das Brennstoffeinspritzventil noch nicht in der finalen Endposition befindet, verliersicher an dieser bis zum Verbau am Zylinderkopf verbleiben.

Besonders vorteilhaft ist es, dass die Radialstützscheibe neben der Funktion der Verliersicherung im vormontierten Zustand auch dafür sorgt, dass durch das radiale Abstützen ein nachteiliges Kippen bzw. ein Pendeln des Brennstoffeinspritzventils beim gesamten Transport der Fuel Charge Assembly bis zur Endmontage wirkungsvoll verhindert ist.

Durch die in den Unteransprüchen aufgeführten Maßnahmen sind vorteilhafte Weiterbildungen und Verbesserungen des im Anspruch 1 angegebenen Brennstoffeinspritzventils möglich.

Erfindungsgemäss ist die Radialstützscheibe an einem Endkragen des Zulaufstutzens in Strömungsrichtung gesehen noch vor dem auf dem Zulaufstutzen montierten Dichtring angeordnet. So ist die Radialstützscheibe am Zulaufstutzen des Brennstoffeinspritzventils sehr einfach und kostengünstig anbringbar. Durch mehrere an der Radialstützscheibe über den Umfang verteilte, radial von einem Grundkörperring nach innen stehende Nasen, die den Endkragen über- bzw. untergreifen, ist ein Verrutschen der Radialstützscheibe am Zulaufstutzen des Brennstoffeinspritzventils in axialer Richtung ausgeschlossen. Solange das Brennstoffeinspritzventil noch nicht in der Aufnahmeöffnung des Anschlussstutzens montiert ist, kann die Radialstützscheibe in Umfangsrichtung auf dem Endkragen des Zulaufstutzens noch verdreht werden.

Besonders vorteilhaft ist es, dass die Radialstützscheibe an ihrem äußeren Umfang alternierend radial weiter nach außen stehende Pressbereiche und radial zurückversetzte Bereiche aufweist, wobei nur die Pressbereiche aufgrund ihres größeren Außendurchmessers als dem Innendurchmesser der Aufnahmeöffnung die Pressung mit dem Anschlussstutzen eingehen.

Die Radialstützscheibe weist in idealer Weise einen über die gesamte Bauteilhöhe in axialer Richtung verlaufenden Schlitz auf, durch den es möglich ist, die Radialstützscheibe besonders einfach am Brennstoffeinspritzventil durch seine Nachgiebigkeit zu montieren und Toleranzen auszugleichen.

Die Radialstützscheibe ist als dünne kompakte Scheibe ausgeführt, die aus einem Kunststoff, wie PEEK, PPS, POM, oder aus einem Metall, wie Aluminium, besteht.

Insbesondere eignen sich die erfindungsgemäßen Radialstützscheiben zur Verliersicherung von Brennstoffeinspritzventilen mit Zulaufstutzen, die einen konisch verlaufenden Abschnitt aufweisen.

### Zeichnung

Ausführungsbeispiele der Erfindung sind in der Zeichnung vereinfacht dargestellt und in der nachfolgenden Beschreibung näher erläutert. Es zeigen
- Figur 1: eine teilweise dargestellte Brennstoffeinspritzvorrichtung in einer bekannten Ausführung,
- Figur 2: eine erste hydraulische Schnittstelle im Bereich einer Aufnahmeöffnung der Brennstoffverteilerleitung,
- Figur 3: eine zweite hydraulische Schnittstelle im Bereich einer Aufnahmeöffnung der Brennstoffverteilerleitung,
- Figur 4: eine schematische Kraftaufteilung der Radialkraft an der konisch verlaufenden Wandung des Zulaufstutzens gemäß Figur 3,
- Figur 5: eine hydraulische Schnittstelle im Bereich einer Aufnahmeöffnung der Brennstoffverteilerleitung mit einer erfindungsgemäßen Radialstützscheibe,
- Figur 6: eine vereinfachte Schnittdarstellung durch die Radialstützscheibe entlang der Linie VI-VI in Figur 5,
- Figur 7: eine erste Ausführung einer erfindungsgemäßen Radialstützscheibe in einer Perspektivansicht und
- Figur 8: eine zweite Ausführung einer erfindungsgemäßen Radialstützscheibe in einer Perspektivansicht.

### Beschreibung der Ausführungsbeispiele

Zum Verständnis der Erfindung wird im Folgenden anhand der Figur 1 eine bekannte Ausführungsform einer Brennstoffeinspritzvorrichtung näher beschrieben. In der Figur 1 ist als ein Ausführungsbeispiel ein Ventil in der Form eines Einspritzventils 1 für Brennstoffeinspritzanlagen von gemischverdichtenden fremdgezündeten Brennkraftmaschinen in einer Seitenansicht dargestellt. Das Brennstoffeinspritzventil 1 ist Teil der Brennstoffeinspritzvorrichtung. Mit einem stromabwärtigen Ende ist das Brennstoffeinspritzventil 1, das in Form eines direkt einspritzenden Einspritzventils zum direkten Einspritzen von Brennstoff in einen Brennraum 25 der Brennkraftmaschine ausgeführt ist, in eine Aufnahmebohrung 20 eines Zylinderkopfes 9 eingebaut. Ein Dichtring 2, insbesondere aus Teflon O, sorgt für eine optimale Abdichtung des Brennstoffeinspritzventils 1 gegenüber der Wandung der Aufnahmebohrung 20 des Zylinderkopfes 9.

Zwischen einem Absatz 21 eines Ventilgehäuses 22 (nicht gezeigt) oder einer unteren Stirnseite 21 eines Abstützelements 19 (Figur 1) und einer z.B. rechtwinklig zur Längserstreckung der Aufnahmebohrung 20 verlaufenden Schulter 23 der Aufnahmebohrung 20 ist ein Zwischenelement 24 eingelegt, das z.B. als Dämpfungs- oder Entkopplungselement dient. Mit Hilfe eines solchen Zwischenelements 24 werden auch Fertigungs- und Montagetoleranzen ausgeglichen und eine querkraftfreie Lagerung auch bei leichter Schiefstellung des Brennstoffeinspritzventils 1 sichergestellt.

Das Brennstoffeinspritzventil 1 weist an seinem zulaufseitigen Ende 3 eine Steckverbindung zu einer Brennstoffverteilerleitung (Fuel Rail) 4 auf, die durch einen Dichtring 5 zwischen einem Anschlussstutzen (Railtasse) 6 der Brennstoffverteilerleitung 4, der im Schnitt dargestellt ist, und einem Zulaufstutzen 7 des Brennstoffeinspritzventils 1 abgedichtet ist. Das Brennstoffeinspritzventil 1 ist in eine Aufnahmeöffnung 12 des Anschlussstutzens 6 der Brennstoffverteilerleitung 4 eingeschoben. Der Anschlussstutzen 6 geht dabei z.B. einteilig aus der eigentlichen Brennstoffverteilerleitung 4 hervor und besitzt stromaufwärts der Aufnahmeöffnung 12 eine durchmesserkleinere Strömungsöffnung 15, über die die Anströmung des Brennstoffeinspritzventils 1 erfolgt. Das Brennstoffeinspritzventil 1 verfügt über einen elektrischen Anschlussstecker 8 für die elektrische Kontaktierung zur Betätigung des Brennstoffeinspritzventils 1.

Der elektrische Anschlussstecker 8 ist über entsprechende elektrische Verbindungen mit einem nicht gezeigten Aktuator verbunden, durch dessen Erregung eine Hubbewegung einer Ventilnadel erzielbar ist, wodurch eine Betätigung eines Ventilschließkörpers, der zusammen mit einer Ventilsitzfläche einen Dichtsitz bildet, ermöglicht ist. Diese letztgenannten Bauteile sind nicht explizit dargestellt und können jegliche hinlänglich bekannte Bauformen aufweisen. Der Aktuator kann beispielsweise elektromagnetisch, piezoelektrisch oder magnetostriktiv betrieben werden.

Um das Brennstoffeinspritzventil 1 und die Brennstoffverteilerleitung 4 weitgehend radialkraftfrei voneinander zu beabstanden und das Brennstoffeinspritzventil 1 sicher in der Aufnahmebohrung 20 des Zylinderkopfes 9 niederzuhalten, ist ein Niederhalter 10 zwischen dem Brennstoffeinspritzventil 1 und dem Anschlussstutzen 6 vorgesehen. Der Niederhalter 10 ist als bügelförmiges Bauteil ausgeführt, z.B. als Stanz-Biege-Teil. Der Niederhalter 10 weist ein teilringförmiges Grundelement 11 auf, von dem aus abgebogen ein Niederhaltebügel 13 verläuft, der an einer stromabwärtigen Endfläche 14 des Anschlussstutzens 6 an der Brennstoffverteilerleitung 4 im eingebauten Zustand anliegt.

Um die Brennstoffeinspritzventile 1 in die Aufnahmebohrungen 20 des Zylinderkopfes 9 einbauen zu können, müssen diese üblicherweise dem Motoren- bzw. Fahrzeughersteller zur Montage zugeliefert werden. In vorteilhafter Weise erfolgt diese Zulieferung in Form einer kompakten Baueinheit, der sogenannten Fuel Charge Assembly, bestehend aus der Brennstoffverteilerleitung 4 und den bereits in den Aufnahmeöffnungen 12 vormontierten Brennstoffeinspritzventilen 1. Dabei muss gewährleistet sein, dass die Brennstoffeinspritzventile 1 nach der Vormontage an der Brennstoffverteilerleitung 4 verliersicher an dieser bis zum Verbau am Zylinderkopf 9 verbleiben. Im vormontierten Zustand, in dem die Fuel Charge Assembly dem Kunden in die Motorenmontage geliefert wird, befindet sich das Brennstoffeinspritzventil 1 noch nicht in der finalen Position der Aufnahmeöffnung 12, sondern ragt aufgrund des noch nicht gespannten Niederhalters 10 weiter als in der endmontierten Position aus der Aufnahmeöffnung 12 heraus.

Die Aufgabe der Erfindung besteht darin, im gesamten Verlauf von der Vormontage bis zur Endmontage sicherzustellen, dass die Brennstoffeinspritzventile 1 sicher und zuverlässig in den Aufnahmeöffnungen 12 der Brennstoffverteilerleitung 4 verbleiben. Durch Vibrationen bzw. Beschleunigungen und Krafteinwirkungen während des Transports und beim Handling der Fuel Charge Assembly in der Vormontage und in der Endmontage beim Fahrzeughersteller bestehen verschiedene Gefahrenquellen für ein ungewolltes Herausfallen der Brennstoffeinspritzventile 1 aus den Aufnahmeöffnungen 12 der Brennstoffverteilerleitung 4, das erfindungsgemäß vollständig ausgeschlossen wird.

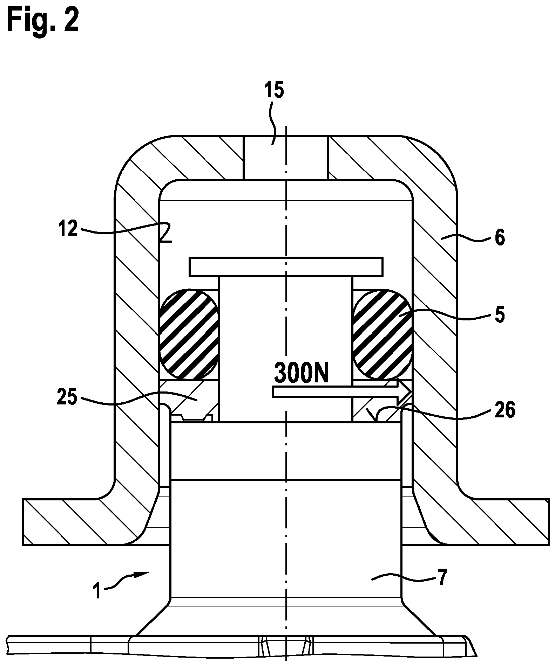

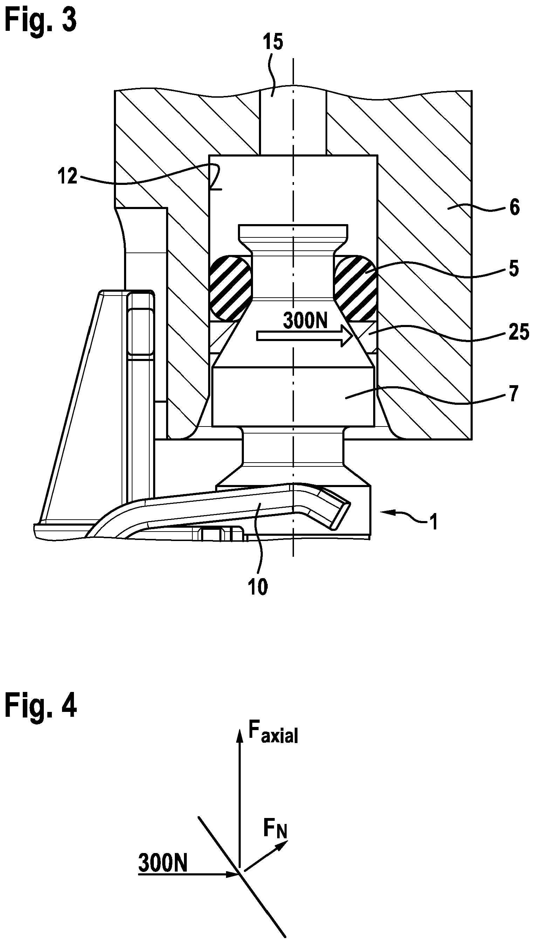

In den Figuren 2 und 3 sind hydraulische Schnittstellen im Bereich der Aufnahmeöffnungen 12 der Brennstoffverteilerleitung 4 dargestellt, wobei der in der Figur 2 gezeigte Aufbau dem der Figur 1 gleicht. Bei dieser Ausführung ist der Zulaufstutzen 7 des Brennstoffeinspritzventils 1 zylindrisch ausgestaltet. Der Dichtring 5 ist zwischen der Innenwand der Aufnahmeöffnung 12 und dem Zulaufstutzen 7 verspannt. Zudem ist ein Stützring 25 unterhalb des Dichtrings 5 vorgesehen, der sich z.B. an einer Schulter 26 des Zulaufstutzens 7 abstützt. Das Brennstoffeinspritzventil 1 wird dabei über den Stützring 25 radial abgestützt. Ein Verrutschen des Dichtrings 5 ist auf diese Weise ausgeschlossen. Insofern wird auch die Pressung des Dichtrings 5 nicht beeinflusst.

Im Gegensatz zur Ausgestaltung der hydraulische Schnittstelle im Bereich der Aufnahmeöffnung 12 der Brennstoffverteilerleitung 4 der Figur 2 ist bei dem in der Figur 3 dargestellten Zulaufstutzen 7 des Brennstoffeinspritzventils 1 ein konisch verlaufender Abschnitt vorgesehen, der vom Stützring 25 mit einer ebenfalls konisch verlaufenden Innenöffnung und teilweise vom Dichtring 5 umgeben ist. Aufgrund einer Kraftaufteilung der Radialkraft an der konisch verlaufenden Wandung des Zulaufstutzens 7 u.a. auch in eine axiale Kraftkomponente (siehe schematische Darstellung in Figur 4), besteht die Gefahr eines einseitigen Verrutschens des Dichtrings 5 nach oben vom konischen Abschnitt weg, wenn die Axialkraft des Stützrings 25 größer als die Verschiebekraft des Dichtrings 5 ist. Dieses Verrutschen könnte mit einer Reduzierung der Pressung des Dichtrings 5 einhergehen. Bei Vibrationen oder dem Pendeln des Brennstoffeinspritzventils 1 während des Transports kann dies abwechselnd auf verschiedenen Seiten über den Umfang der Innenwand der Aufnahmeöffnung 12 geschehen, so dass ein Risiko des Lockerns des Brennstoffeinspritzventils 1 in der Aufnahmeöffnung 12 besteht.

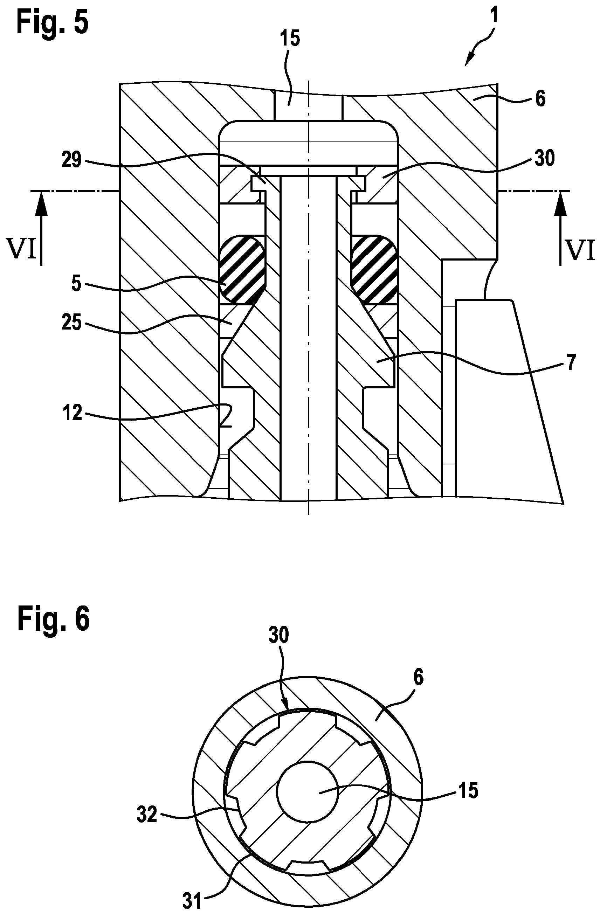

In der Figur 5 ist eine teilweise dargestellte Brennstoffeinspritzvorrichtung mit einem ersten erfindungsgemäßen Brennstoffeinspritzventil 1 gezeigt. Bei dieser Ausführung des Brennstoffeinspritzventils 1 weist dieses zur Verliersicherung an seinem zulaufseitigen Ende 3 im Bereich eines Endkragens 29 eine erfindungsgemäße Radialstützscheibe 30 auf. Die Radialstützscheibe 30 ist dabei als dünne, aber kompakte Scheibe ausgeführt, die aus einem Kunststoff (z.B. PEEK, PPS, POM) oder aus einem Metall (z.B. Aluminium) bestehen kann. Die Radialstützscheibe 30 wird z.B. über einen Hilfsdorn axial von oben auf das Brennstoffeinspritzventil 1 montiert. Alternativ kann die Radialstützscheibe 30 mittels eines Spreizgreifers oder eines ähnlichen Werkzeugs montiert werden. Insofern ist die Radialstützscheibe 30 in Strömungsrichtung gesehen noch vor dem Dichtring 5 angeordnet.

Figur 6 stellt eine vereinfachte Schnittdarstellung durch die Radialstützscheibe 30 entlang der Linie VI-VI in Figur 5 dar. Mit dieser Darstellung soll vor allen Dingen verdeutlicht werden, dass die Radialstützscheibe 30 an ihrem äußeren Umfang alternierend radial weiter nach außen stehende Pressbereiche 31 und radial zurückversetzte Bereiche 32 aufweist.

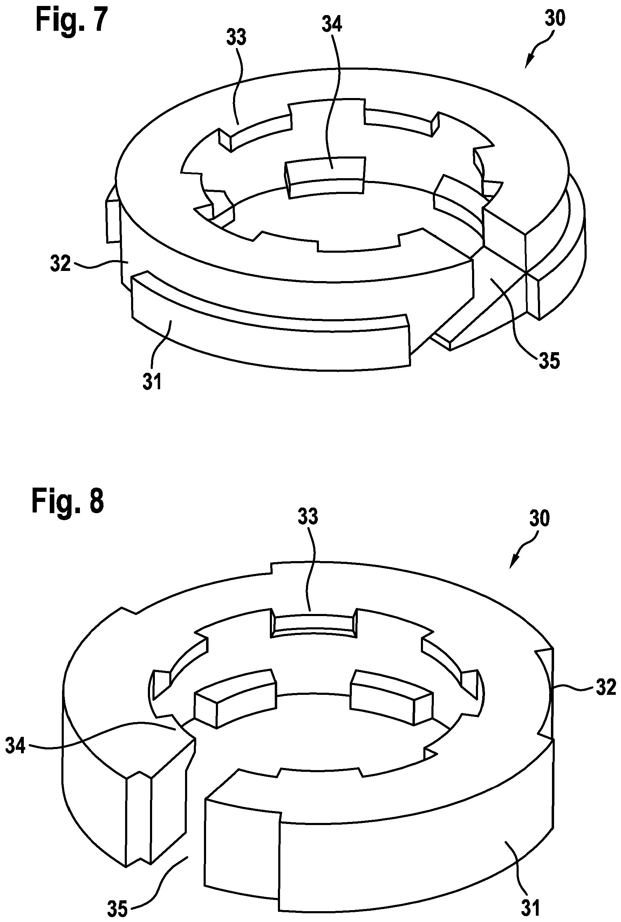

Eine erste Ausführung einer erfindungsgemäßen Radialstützscheibe 30 ist in einer Perspektivansicht in Figur 7 dargestellt. Die Radialstützscheibe 30 weist eine ebene Ober- und Unterseite auf. Die Geometrie der Radialstützscheibe 30 zeichnet sich dadurch aus, dass über den Umfang verteilt mehrere radial von einem Grundkörperring nach innen stehende Nasen 33, 34 ausgeformt sind. Dabei sind mehrere Nasen 33 von der Oberseite der Radialstützscheibe 30 ausgehend ausgebildet, während von der Unterseite der Radialstützscheibe 30 ausgehend weitere radial nach innen stehende Nasen 34 vorgesehen sind. Wie in Figur 7 gezeigt, können die Nasen 33 und 34 über den Umfang gesehen zueinander versetzt ausgebildet sein. Die Nasen 33, 34 besitzen innere Begrenzungsflächen, die entweder senkrecht, also achsparallel, oder schräg verlaufen oder idealerweise, wie aus Figur 7 hervorgeht, aus einer senkrechten Begrenzungsfläche heraus eine Anschrägung aufweisen. Die Nasen 33, 34 sorgen dafür, dass durch den gebildeten Hinterschnitt an der bestehenden Geometrie des Endkragens 29 des Zulaufstutzens 7 die Radialstützscheibe 30 am Zulaufstutzen 7 sicher und zuverlässig verbleibt. Die Nasen 33 an der Oberseite müssen die entsprechenden Montagekräfte aufnehmen können. Darüber hinaus müssen die Nasen 33 an der Oberseite im Betrieb und bei Erstbefüllung des Systems auch hydraulische Kräfte aufnehmen können. Die Nasen 34 an der Unterseite müssen die entsprechenden Demontagekräfte (nach Alterung über die Gebrauchsdauer im jeweiligen Brennstoff) aufnehmen können.

In der in Figur 7 gezeigten Ausführung ist die Radialstützscheibe 30 mit einem Schlitz 35 versehen, der in einem ersten axialen Teilabschnitt senkrecht verläuft und in einem zweiten axialen Teilabschnitt schräg geneigt. Diese Ausgestaltungsvariante ist besonders vorteilhaft, da die Radialstützscheiben 30 als Schüttgut gehandhabt werden können, ohne dass sie sich gegenseitig verhaken. Der Schlitz 35 kann aber auch durchgängig schräg geneigt verlaufen. Auf den Schlitz 35 könnte auch ganz verzichtet werden, wenn das Material der Radialstützscheibe 30 ausreichend elastisch ist. In der Regel wird ein Schlitz 35 in der Radialstützscheibe 30 aus Montagegründen erforderlich sein. Die Montierbarkeit der Radialstützscheibe 30 am Endkragen 29 des Zulaufstutzens 7 ist durch den Schlitz 35 deutlich vereinfacht, da das Material der Radialstützscheibe 30 gegenüber einer ungeschlitzten Variante deutlich geringeren Dehnungsbelastungen ausgesetzt ist.

Die Radialstützscheibe 30 besitzt in ihren radial am weitesten nach außen stehenden Pressbereichen 31 einen größeren Außendurchmesser auf als den Innendurchmesser der Aufnahmeöffnung 12 der Brennstoffverteilerleitung 4. Insofern wird bei der Vormontage des Brennstoffeinspritzventils 1 in der Aufnahmeöffnung 12 die Radialstützscheibe 30 unter Pressung eingefügt, wobei durch den Schlitz 35 die Montage erleichtert und ein Toleranzausgleich ermöglicht ist. Bei dem dargestellten Ausführungsbeispiel verlaufen die Pressbereiche 31 nur über einen Teil der Bauteilhöhe, hier nur über die untere Hälfte der Bauteilhöhe. Die radial zurückversetzten Bereiche 32 bilden Durchflusstaschen, die verhindern sollen, dass die Radialstützscheibe 30 bei der Erstbefüllung mit Brennstoff vom Endkragen 29 des Zulaufstutzens 7 heruntergebogen wird und auf den Dichtring 5 drückt.

Eine zweite Ausführung einer erfindungsgemäßen Radialstützscheibe 30 ist in einer Perspektivansicht in Figur 8 dargestellt. Diese Radialstützscheibe 30 unterscheidet sich von der Radialstützscheibe 30 gemäß Figur 7 dadurch, dass ein senkrecht verlaufender Schlitz 35 vorgesehen ist, dass sich die Pressbereiche 31 über die gesamte Bauteilhöhe erstrecken und der Schlitz 35 außermittig in einem der drei radial zurückversetzten Bereiche 32 angeordnet ist.

Die an den Radialstützscheiben 30 der Figuren 7 und 8 gezeigten geometrischen Einzelmerkmale sind auch jederzeit miteinander kombinierbar.

## Patentansprüche

1. Brennstoffeinspritzventil (1) für Brennstoffeinspritzanlagen von Brennkraftmaschinen, insbesondere zum direkten Einspritzen von Brennstoff in den Brennraum einer Brennkraftmaschine, mit einem Aktuator, durch dessen Erregung eine Hubbewegung einer Ventilnadel erzielbar ist, wodurch eine Betätigung eines Ventilschließkörpers, der zusammen mit einer Ventilsitzfläche einen Dichtsitz bildet, ermöglicht ist, und mit einem zulaufseitigen Zulaufstutzen (7) für eine Brennstoffzufuhr,
wobei am zulaufseitigen Ende des Zulaufstutzens (7) eine Radialstützscheibe (30) zur Verliersicherung des Brennstoffeinspritzventils (1) in einem montierten Zustand angeordnet ist,
und wobei am Zulaufstutzen (7) ein ihn umgebender Dichtring (5) vorgesehen ist und die Radialstützscheibe (30) in Strömungsrichtung gesehen noch vor dem Dichtring (5) angeordnet ist,
**dadurch gekennzeichnet,**
**dass** am zulaufseitigen Ende (3) des Zulaufstutzens (7) ein Endkragen (29) ausgeformt ist und die Radialstützscheibe (30) diesen zumindest teilweise über- und untergreift.

2. Brennstoffeinspritzventil nach Anspruch 1,
**dadurch gekennzeichnet,**
**dass** an der Radialstützscheibe (30) über den Umfang verteilt mehrere radial von einem Grundkörperring nach innen stehende Nasen (33, 34) ausgeformt sind.

3. Brennstoffeinspritzventil nach Anspruch 2,
**dadurch gekennzeichnet,**
**dass** mehrere Nasen (33) von der Oberseite der Radialstützscheibe (30) ausgehend ausgebildet sind, während von der Unterseite der Radialstützscheibe (30) ausgehend weitere radial nach innen stehende Nasen (34) vorgesehen sind.

4. Brennstoffeinspritzventil nach Anspruch 3,
**dadurch gekennzeichnet,**
**dass** die Nasen (33, 34) der beiden Ebenen über den Umfang gesehen zueinander versetzt ausgebildet sind.

5. Brennstoffeinspritzventil nach einem der vorhergehenden Ansprüche,
**dadurch gekennzeichnet,**
**dass** die Radialstützscheibe (30) an ihrem äußeren Umfang alternierend radial weiter nach außen stehende Pressbereiche (31) und radial zurückversetzte Bereiche (32) aufweist.

6. Brennstoffeinspritzventil nach Anspruch 5,
**dadurch gekennzeichnet,**
**dass** sich die Pressbereiche (31) der Radialstützscheibe (30) entweder über einen Teil der Bauteilhöhe oder über die gesamte Bauteilhöhe erstrecken.

7. Brennstoffeinspritzventil nach einem der vorhergehenden Ansprüche,
**dadurch gekennzeichnet,**
**dass** die Radialstützscheibe (30) durch einen über die gesamte Bauteilhöhe in axialer Richtung verlaufenden Schlitz (35) unterbrochen ist.

8. Brennstoffeinspritzventil nach einem der vorhergehenden Ansprüche,
**dadurch gekennzeichnet,**
**dass** die Radialstützscheibe (30) als dünne kompakte Scheibe ausgeführt ist, die aus einem Kunststoff, wie PEEK, PPS, POM, oder aus einem Metall, wie Aluminium, besteht.

9. Brennstoffeinspritzventil nach einem der vorhergehenden Ansprüche,
**dadurch gekennzeichnet,**
**dass** der Zulaufstutzen (7) einen konisch verlaufenden Abschnitt aufweist.

10. Brennstoffeinspritzvorrichtung mit einem Brennstoffeinspritzventil (1) nach einem der vorhergehenden Ansprüche,
**dadurch gekennzeichnet,**
**dass** eine Brennstoffverteilerleitung (4) wenigstens einen Anschlussstutzen (6) mit einer Aufnahmeöffnung (12) für das Brennstoffeinspritzventil (1) aufweist und der Zulaufstutzen (7) des Brennstoffeinspritzventils (1) durch Verpressen der Radialstützscheibe (30) in der Aufnahmeöffnung (12) verliersicher vormontierbar ist.

## Claims

1. Fuel injection valve (1) for fuel injection systems of internal combustion engines, in particular for the direct injection of fuel into the combustion chamber of an internal combustion engine, with an actuator, by way of the excitation of which a stroke movement of a valve needle can be achieved, as a result of which an actuation of a valve closing body which forms a sealing seat together with a valve seat face is made possible, and with a feed-side feed connecting piece (7) for a fuel feed,
a radial supporting disc (30) for captive securing of the fuel injection valve (1) in a mounted state being arranged at the feed-side end of the feed connecting piece (7),
and a sealing ring (5) which surrounds the feed connecting piece (7) being provided on the latter, and the radial supporting disc (30) still being arranged upstream of the sealing ring (5) as viewed in the flow direction,
**characterized**
**in that** an end collar (29) is shaped at the feed-side end (3) of the feed connecting piece (7), and the radial supporting disc (30) engages over and under this end collar (29) at least partially.

2. Fuel injection valve according to Claim 1,
**characterized**
**in that** a plurality of lugs (33, 34) which project radially inwards from a main body ring are formed on the radial supporting disc (30) such that they are distributed over the circumference.

3. Fuel injection valve according to Claim 2,
**characterized**
**in that** a plurality of lugs (33) are configured so as to emanate from the upper side of the radial supporting disc (30), while further radially inwardly projecting lugs (34) are provided so as to emanate from the lower side of the radial supporting disc (30).

4. Fuel injection valve according to Claim 3,
**characterized**
**in that** the lugs (33, 34) of the two planes are configured offset with respect to one another as viewed over the circumference.

5. Fuel injection valve according to one of the preceding claims,
**characterized**
**in that** the radial supporting disc (30) has, on its outer circumference, pressing regions (31) which project radially further to the outside and radially recessed regions (32) in an alternating manner.

6. Fuel injection valve according to Claim 5,
**characterized**
**in that** the pressing regions (31) of the radial supporting disc (30) extend either over a part of the component height or over the entire component height.

7. Fuel injection valve according to one of the preceding claims,
**characterized**
**in that** the radial supporting disc (30) is interrupted by way of a slot (35) which runs in the axial direction over the entire component height.

8. Fuel injection valve according to one of the preceding claims,
**characterized**
**in that** the radial supporting disc (30) is configured as a thin compact disc which comprises a plastic, such as PEEK, PPS, POM, or a metal, such as aluminium.

9. Fuel injection valve according to one of the preceding claims,
**characterized**
**in that** the feed connecting piece (7) has a conically running portion.

10. Fuel injection apparatus with a fuel injection valve (1) according to one of the preceding claims,
**characterized**
**in that** a fuel distributor line (4) has at least one connector piece (6) with a receiving opening (12) for the fuel injection valve (1), and the feed connecting piece (7) of the fuel injection valve (1) can be pre-mounted captively in the receiving opening (12) by way of pressing of the radial supporting disc (30).

## Revendications

1. Soupape d'injection de carburant (1) pour des installations d'injection de carburant de moteurs à combustion interne, notamment pour l'injection directe de carburant dans la chambre de combustion d'un moteur à combustion interne, avec un actionneur par l'excitation duquel un mouvement de course d'une aiguille de soupape peut être obtenu, ce qui permet d'actionner un corps de fermeture de soupape qui forme un siège d'étanchéité conjointement avec une surface de siège de soupape, et avec une tubulure d'admission (7) côté admission pour une amenée de carburant,
un disque d'appui radial (30) étant agencé à l'extrémité côté admission de la tubulure d'admission (7) pour empêcher la perte de la soupape d'injection de carburant (1) dans un état monté,
et il étant prévu sur la tubulure d'admission (7) une bague d'étanchéité (5) qui l'entoure et le disque d'appui radial (30) étant agencé, vu dans la direction d'écoulement, encore avant la bague d'étanchéité (5),
**caractérisée en ce**
**qu'**un collet d'extrémité (29) est formé à l'extrémité (3) côté admission de la tubulure d'admission (7) et le disque d'appui radial (30) s'engage au moins partiellement par-dessus et par-dessous celui-ci.

2. Soupape d'injection de carburant selon la revendication 1,
**caractérisée en ce que**
plusieurs ergots (33, 34) répartis sur la périphérie, faisant saillie radialement vers l'intérieur à partir d'une bague de corps de base sont formés sur le disque d'appui radial (30).

3. Soupape d'injection de carburant selon la revendication 2,
**caractérisée en ce que**
plusieurs ergots (33) sont réalisés en partant du côté supérieur du disque d'appui radial (30), tandis que d'autres ergots (34) faisant saillie radialement vers l'intérieur sont prévus en partant du côté inférieur du disque d'appui radial (30).

4. Soupape d'injection de carburant selon la revendication 3,
**caractérisée en ce que**
les ergots (33, 34) des deux plans sont réalisés décalés l'un par rapport à l'autre, vus sur la périphérie.

5. Soupape d'injection de carburant selon l'une quelconque des revendications précédentes,
**caractérisée en ce que**
le disque d'appui radial (30) présente, sur sa périphérie extérieure, en alternance des zones de compression (31) faisant saillie plus loin radialement vers l'extérieur et des zones (32) décalées radialement vers l'arrière.

6. Soupape d'injection de carburant selon la revendication 5,
**caractérisée en ce que**
les zones de compression (31) du disque d'appui radial (30) s'étendent soit sur une partie de la hauteur du composant, soit sur toute la hauteur du composant.

7. Soupape d'injection de carburant selon l'une quelconque des revendications précédentes,
**caractérisée en ce que**
le disque d'appui radial (30) est interrompu par une fente (35) s'étendant dans la direction axiale sur toute la hauteur du composant.

8. Soupape d'injection de carburant selon l'une quelconque des revendications précédentes,
**caractérisée en ce que**
le disque d'appui radial (30) est conçu sous forme de disque compact mince, qui est constitué d'une matière plastique, telle que le PEEK, le PPS, le POM, ou d'un métal, tel que l'aluminium.

9. Soupape d'injection de carburant selon l'une quelconque des revendications précédentes,
**caractérisée en ce que**
la tubulure d'admission (7) présente une section s'étendant de manière conique.

10. Dispositif d'injection de carburant avec une soupape d'injection de carburant (1) selon l'une quelconque des revendications précédentes,
**caractérisé en ce**
**qu'**une conduite de distribution de carburant (4) présente au moins une tubulure de raccordement (6) avec une ouverture de réception (12) pour la soupape d'injection de carburant (1) et la tubulure d'admission (7) de la soupape d'injection de carburant (1) peut être prémontée de manière imperdable dans l'ouverture de réception (12) par compression du disque d'appui radial (30).
